(19) Europäisches Patentamt
European Patent Office
Office européen des brevets

(11) **EP 1 995 932 B1**

(12) **FASCICULE DE BREVET EUROPEEN**

(45) Date de publication et mention
de la délivrance du brevet:
**28.04.2010 Bulletin 2010/17**

(51) Int Cl.:
***H04L 29/06*** *(2006.01)*

(21) Numéro de dépôt: **08156736.4**

(22) Date de dépôt: **22.05.2008**

(54) **Système et procédé de traitement d'informations d'état de présence à fiabilité améliorée**

System und Verfahren zur Verarbeitung von Informationen über den Präsenzzustand mit verbesserter Zuverlässigkeit

System and method for processing attendance status information with improved reliability

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **24.05.2007 FR 0755246**

(43) Date de publication de la demande:
**26.11.2008 Bulletin 2008/48**

(73) Titulaire: **FRANCE TELECOM**
**75015 Paris (FR)**

(72) Inventeurs:
• **Toutain, François**
**22700, Louannec (FR)**

• **Bouille, Philippe**
**22560, Pleumeur Bodou (FR)**
• **Collin, Guillaume**
**22290, Goudelin (FR)**

(74) Mandataire: **Desormiere, Pierre-Louis et al**
**Cabinet Beau de Loménie**
**158, rue de l'Université**
**75340 Paris Cedex 07 (FR)**

(56) Documents cités:
**US-A1- 2002 143 916 US-A1- 2004 030 753**

**Description**

La présente invention se situe dans le domaine des communications interpersonnelles numériques et concerne plus particulièrement la gestion d'informations de « présence » permettant de caractériser l'état de présence d'un utilisateur sur un ou plusieurs terminaux connectés à au moins un réseau de télécommunications.

Par la suite, le terme « informations de présence » désignera des informations relatives à la présence « physique » d'un utilisateur sur un terminal.

Plus précisément, les informations de présence d'un utilisateur caractérisent le fait que cet utilisateur est réellement proche d'un de ses terminaux, et donc joignable. De telles informations indiquent, par exemple, que l'utilisateur est prêt à recevoir une communication sur un terminal donné, ou, au contraire, que celui-ci est indisponible car déjà engagé dans une communication.

Les informations de présence caractérisant un état de présence de l'utilisateur sont destinées à être transmises à travers le réseau, de manière à être consultables par d'autres utilisateurs, et/ou par des applications automatiques mises en oeuvre par le réseau, qui peuvent ainsi prendre connaissance de l'état de présence actuel de cet utilisateur.

Parmi les mécanismes de gestion de présence actuellement connus, il existe des procédés de mise à jour d'un état de présence d'un utilisateur sur un terminal, à partir d'informations d'état de présence fournies par au moins une source d'état associé à ce terminal.

Dans le cas où l'utilisateur possède plusieurs terminaux connectés à un réseau IP (« Internet Protocol »), il est connu d'obtenir selon le protocole XMPP (« eXtensible Messaging and Presence Protocol ») des informations d'état de présence fournies par au moins une source d'état de chacun des terminaux, de manière à identifier le terminal sur lequel l'utilisateur est joignable.

Toutefois, aucun des mécanismes connus ne permet de déterminer avec fiabilité l'état de présence actuel d'un utilisateur. Ce manque de fiabilité est d'autant plus important que :

- la fréquence de mise à jour des informations de présence fournies par les différentes sources d'état est faible ; et/ou
- certaines sources d'état ne sont pas aptes à fournir une mise à jour de leurs informations d'état de présence à un instant donné, en raison d'une défaillance quelconque de cette source.

En effet, chaque information de présence, obtenue par une source d'état quelconque à un instant initial, perd de sa valeur ou de sa pertinence, au fur et à mesure que l'ancienneté de cette information augmente. Par exemple, si un capteur vidéo d'un poste de travail interrogé à un instant initial t détecte la présence d'une forme humaine, la probabilité que l'utilisateur se trouve à ce poste de travail à l'instant t est bien évidemment élevée. Cependant, à un instant ultérieur t'>t, il est possible que l'utilisateur ait quitté le poste de travail, auquel cas l'information de présence fournie à l'instant t n'est plus valable à partir de l'instant t'.

En particulier, si ce changement d'état intervient dans un intervalle de temps compris entre deux événements de mise à jour successifs, l'état de présence de l'utilisateur pendant cet intervalle de temps sera erroné, l'information de présence étant inexacte car elle ne tient pas compte du changement d'état.

De toute façon, dans l'état actuel de la technique, tant que la mise à jour de cette information n'est pas réalisée, l'état de présence déterminé par un système de gestion de présence à partir de cette information de présence inexacte, n'est pas fiable.

Parmi les solutions proposées dans l'état antérieur, l'amélioration de la pertinence de cet état n'est possible qu'à condition que chaque source d'état fournisse une mise à jour de ses informations d'état de présence. Cependant, cette approche nécessite d'effectuer des mises à jour fréquentes pour rester fiable, ce qui est contraignant et consommateur de ressources.

Le document US 2002/0143916 décrit un procédé pour déterminer l'état de présence d'un utilisateur de messagerie instantanée.

La présente invention offre une solution qui ne présente pas les inconvénients précités, en modifiant constamment au cours du temps la pertinence de l'information de présence fournie par chaque source d'état, de manière à prendre en compte le vieillissement de ces informations. En pondérant l'information de présence brute fournie par une source d'état (c'est-à-dire en modifiant le poids qui lui est affecté), au moyen d'un procédé de pondération chargé de prendre en compte l'ancienneté de cette information, la présente invention permet de maintenir l'acuité de l'information de présence de manière optimale au cours du temps, sans nécessiter une fréquence de mise à jour excessivement élevée.

Plus précisément, la présente invention propose un procédé de traitement d'informations d'état de présence relatives à un état de présence d'un utilisateur sur un terminal, ces informations d'état de présence étant fournies par au moins une source d'état associée au terminal. Ce procédé comprend une étape de pondération lors de laquelle lesdites informations sont pondérées en fonction d'un niveau de pertinence calculé en fonction du temps, de manière à corriger le poids des informations de présence sur un intervalle de temps déterminé.

La pondération des informations d'état de présence conformément à la présente invention permet de corriger la pertinence de ces informations au cours du temps, de manière à fournir des informations plus fiables. Ces informations corrigées permettent de maximiser la fiabilité d'un état de présence d'un utilisateur déterminé par un système de gestion de présence, notamment dans le cas où une mise à jour des informations d'état de présence ne peut pas être réalisée par chaque source d'état ou que cette mise à jour ne peut être effectuée suffisamment régulièrement.

Selon une autre caractéristique de l'invention, à chaque source d'état est associé un niveau de pertinence adapté à cette source.

Cette adaptation permet de rendre compte de l'évolution de la véracité d'une information de présence de manière spécifique à chaque source d'état au cours du temps pour fournir des informations de présence avec un taux de confiance amélioré.

Selon une autre caractéristique de l'invention, une information de présence fournie par une source d'état est constituée par une probabilité de présence, cette probabilité de présence étant corrigée lors de l'étape de pondération, en lui appliquant une fonction d'obsolescence, de manière à obtenir une probabilité de présence corrigée, la fonction d'obsolescence définissant un niveau de pertinence calculé en fonction du temps.

L'application de la fonction d'obsolescence sur la probabilité de présence permet de corriger (en particulier de diminuer) la valeur de cette probabilité au cours du temps, afin de prendre en considération d'éventuels changements d'état tels que l'éloignement soudain de l'utilisateur par rapport au capteur vidéo (source d'état) dans l'exemple décrit ci-avant.

La présente invention vise également un procédé de mise à jour d'un état de présence d'un utilisateur sur au moins un terminal connecté à un réseau de télécommunications, à partir d'informations d'état de présence fournies par au moins une source d'état du terminal. L'état de présence est déterminé lors d'une étape d'agrégation comprenant :

- la collecte d'une pluralité de valeurs de probabilité de présence unitaire fournies par une pluralité de sources d'état associées au terminal ;
- la pondération des valeurs de probabilité de présence unitaire conformément à la présente invention comme décrit ci-avant ;
- le calcul d'une probabilité d'état de présence agrégée, résultant d'une combinaison linéaire des valeurs de probabilité de présence unitaire.

Selon une caractéristique de l'invention, lors de l'étape d'agrégation, les valeurs de probabilité de présence unitaire $(V_1,...,V_n)$ sont classées par ordre croissant, de manière à former un ensemble ordonné de valeurs, avant d'être utilisées pour le calcul de la probabilité d'état de présence agrégée.

Selon une autre caractéristique de l'invention, la probabilité de présence agrégée P associée au terminal est définie par $P = M_n$ calculée par récurrence selon la formule suivante : $M_i = M_{i-1} + O_i (V_i - M_{i-1})$ avec la condition initiale suivante $M_0 = 0.5$ ; où i est un entier naturel tel que $1 \leq i \leq n$ avec n désignant le dernier élément dudit ensemble ordonné (E) et où $O_i$ désigne la fonction d'obsolescence associée à la source d'état ayant fourni la $i^{ème}$ valeur $V_i$ de probabilité de présence unitaire.

La présente invention vise également un dispositif de traitement d'informations d'état de présence relatives à un état de présence d'un utilisateur sur un terminal, ces informations d'état de présence étant fournies par au moins une source d'état associée au terminal. Le dispositif selon l'invention comprend des moyens pour pondérer les informations d'état de présence en fonction d'un niveau de pertinence calculé en fonction du temps, de manière à corriger le poids des informations d'état de présence sur un intervalle de temps déterminé.

Les avantages et réalisations particulières de ce dispositif de traitement sont les mêmes que ceux associés au procédé de traitement selon l'invention, tels que décrits ci-avant.

La présente invention vise également un système de mise à jour d'un état de présence d'un utilisateur sur un au moins un terminal connecté à un réseau de télécommunication, chaque terminal étant associé à au moins une source d'état destinée à fournir des informations d'état de présence dudit utilisateur. Le système selon l'invention comprend un dispositif d'agrégation de données comprenant :

- des moyens pour collecter une pluralité de valeurs de probabilité de présence unitaire fournies par une pluralité de sources d'état associées au terminal ; et
- des moyens pour pondérer les valeurs de probabilités de présence unitaire en fonction d'un niveau de pertinence calculé en fonction du temps, de manière à corriger le poids des probabilités d'état de présence sur un intervalle de temps déterminé ;
- des moyens pour calculer une probabilité d'état de présence agrégée, résultant d'une combinaison linéaire des valeurs de probabilité de présence unitaire.

Selon une caractéristique de l'invention, le système comprend des moyens de cassement pour classer les valeurs de probabilité de présence unitaire par ordre croissant de manière à former un ensemble ordonné de valeurs, destinées à être utilisées par les moyens de calcul pour calculer la probabilité d'état de présence agrégée.

Selon une autre caractéristique de l'invention, les moyens de calcul sont adaptés à calculer par récurrence la probabilité de présence agrégée P définie par $P = M_n$ selon la formule suivante :

$M_i = M_{i-1} + O_i(V_i - M_{i-1})$ avec la condition initiale suivante $M_0 = 0.5$ ; où i est un entier naturel tel que $1 \leq i \leq n$, avec n désignant le dernier élément de l'ensemble ordonné E et où $O_i$ désigne la fonction d'obsolescence associée à la source d'état ayant fourni la $i^{\text{ème}}$ valeur $V_i$ de probabilité de présence unitaire.

En variante, les différentes étapes du procédé de mise à jour ou du procédé dé traitement selon l'invention sont déterminées par des instructions de programmes d'ordinateurs.

En conséquence, l'invention vise aussi un programme d'ordinateur sur un support d'enregistrement d'informations, ce programme étant susceptible d'être mis en oeuvre dans un dispositif de traitement ou un système de mise à jour, ou plus généralement dans un ordinateur, ce programme comportant des instructions adaptées à la mise en oeuvre des étapes d'un procédé de traitement ou du procédé de mise à jour tel que décrit ci-dessus.

Ce programme d'ordinateur peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement d'informations lisible par un ordinateur, et comportant des instructions d'un programme d'ordinateur tel que mentionné ci-dessus.

Ce support d'enregistrement peut être une mémoire ROM ou n'importe quelle entité ou dispositif capable de stocker le programme d'ordinateur, tel qu'un un CD ROM ou une ROM de circuit microélectronique, ou encore un moyen d'enregistrement magnétique, par exemple une disquette (floppy disc), un disque dur, une mémoire PROM, EPROM, EEPROM.

Le support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'enregistrement peut être un circuit intégré dans lequel le programme est incorporé, le circuit étant adapté pour exécuter ou pour être utilisé dans l'exécution du procédé en question.

Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :

- la figure 1 illustre, de manière schématique, un système de gestion de présence d'un utilisateur comprenant un dispositif d'agrégation selon la présente invention ;
- la figure 2 illustre, de manière schématique, un dispositif d'agrégation selon la présente invention en communication avec un terminal de l'utilisateur ;
- les figures 3A, 3B, 3C illustrent, de manière schématique, des exemples de fonctions d'obsolescence utilisées pour pondérer des informations d'état de présence unitaires selon le procédé de pondération conformément à la présente invention ;
- les figures 4A, 4B illustrent, de manière schématique, des exemples de scénarios de mise à jour montrant l'évolution temporelle de la pertinence d'informations fournies par deux sources d'état distinctes et pondérées conformément à la présente invention ;
- la figure 5 représente, sous forme d'organigramme, les étapes du procédé d'agrégation incluant une opération de pondération mise en oeuvre au niveau d'un agrégateur selon la présente invention ;
- la figure 6 représente, sous forme schématique, un dispositif de traitement d'informations d'état de présence selon un mode particulier de réalisation de l'invention ;
- la figure 7 représente, sous forme d'organigramme, les étapes du procédé de pondération mis en oeuvre par le dispositif de la figure 6 ; et
- la figure 8 représente un exemple d'utilisation du système de gestion de présence selon la présente invention.

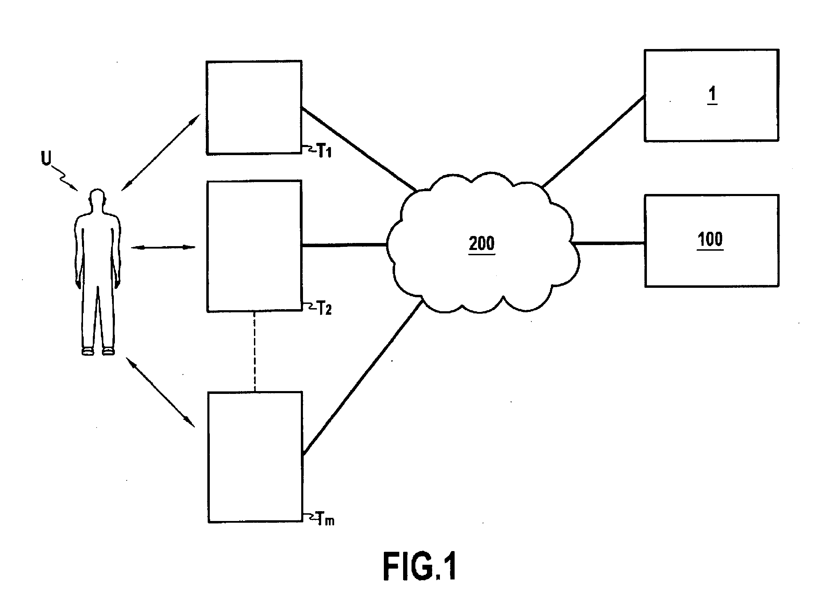

La présente invention va être maintenant décrite dans le cadre d'un système de gestion de présence pour mettre à jour un état de présence d'un utilisateur U possédant plusieurs terminaux $T_1, ..., T_m$ connectés à un réseau 200 de télécommunication, comme illustré de manière schématique sur la figure 1.

Les terminaux $T_1, ..., T_m$ peuvent être pris parmi l'un quelconque des dispositifs suivants : un ordinateur, un PDA (« Personal Digital Assistant »), un terminal de téléphonie fixe ou mobile (GSM, UMTS), ou tout autre type de terminal apte à communiquer via le réseau 200.

Le système de gestion de présence de la figure 1 comprend un dispositif d'agrégation 100 dénommé par la suite « agrégateur » 100 constitué par un serveur de présence connecté aux terminaux $T_1$,..., $T_n$ via le réseau 200. L'agrégateur 100 est adapté à générer, pour chaque terminal, une information d'état de présence de l'utilisateur qui est destinée à être transmise à un serveur applicatif 1 via le réseau 200.

Le réseau 200 désigne de manière générale un réseau de communication permettant la transmission de données numériques entre l'agrégateur 100 et des terminaux d'utilisateurs. A titre d'exemple, ce réseau 200 peut être choisi parmi l'un quelconque des réseaux suivants : un réseau RNIS (Réseau Numérique à Intégration de Services), un réseau à commutation de paquets IP ou un réseau cellulaire de téléphonie sans fil (GSM, UMTS).

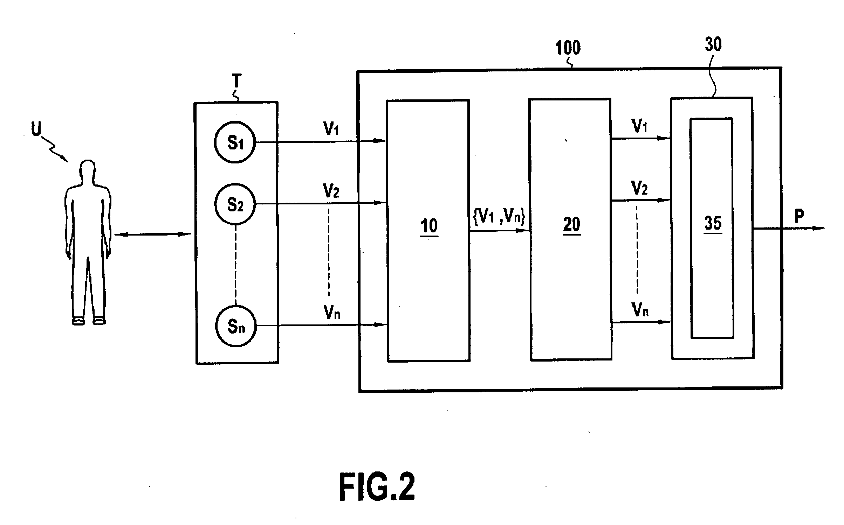

Soit T un terminal quelconque choisi parmi la pluralité de terminaux $T_1$,...,$T_n$ de l'utilisateur U. Comme illustré sur la figure 2, l'agrégateur 100 génère une probabilité de présence agrégée de l'utilisateur P, à partir de probabilités de présence unitaires $\{V_i\}_{1 \leq i \leq n}$ notées $V_1$,...,$V_n$ et fournies par une pluralité de sources d'état $\{S_i\}_{1 \leq i \leq n}$ respectivement notées $S_1$,...,$S_n$ associées au terminal T.

Par définition, une source d'état $S_i$ désignera de manière générale, un moyen hardware et/ou un moyen logiciel tel qu'un processus informatique permettant de réaliser au moins les opérations suivantes :

- générer des informations d'état de présence unitaire $V_i$ relatives à la présence de l'utilisateur U sur le terminal T auquel est associée cette source d'état $S_i$; et
- communiquer ces informations d'état de présence unitaire $V_i$.

Les informations d'état de présence unitaire $V_i$ sont transmises à l'agrégateur 100 selon l'invention via le réseau 200 (non représenté sur la figure 2, mais déjà décrit en référence à la figure 1).

L'information d'état de présence fournie par une source d'état $S_i$ est complétée par une estampille temporelle $Z_i$, de sorte que les états puissent être ordonnés dans le temps pour leur analyse ultérieure.

Conformément à la présente invention, les informations d'état de présence unitaire constituées par les probabilités de présence unitaires $V_1$,...,$V_n$ fournies par les sources d'état $S_1$,...,$S_n$ respectives décrites ci-dessus sont pondérées par des fonctions d'obsolescence.

Par définition, une « fonction d'obsolescence » désignera par la suite une fonction permettant d'affecter dans le temps un poids spécifique $p_i$ aux informations de présence unitaires $V_i$ fournies par chaque source d'état $S_i$. Chaque poids est déterminé selon un niveau de pertinence calculé en fonction du temps au moyen de la fonction d'obsolescence, de manière à corriger la pertinence de l'information de présence issue de chaque source d'état, au fur et à mesure que cette information vieillit.

A chaque source d'état $S_i$ est associée une fonction d'obsolescence $O_i$ définie sur un intervalle de temps déterminé. Le choix approprié de cette fonction d'obsolescence $O_i$ est adapté à chaque source d'état $S_i$ permettant de modéliser des comportements très variables propres à cette source d'état $S_i$.

Dans le cas où la source d'état considérée est un composant réseau chargé de renseigner la présence d'un terminal sur un réseau, la fonction d'obsolescence est une fonction constante par paliers dans le cas d'un état de présence du terminal sur le réseau sujet à un temporisateur. Dans ce cas, la probabilité de présence unitaire est constante avant l'expiration du temporisateur, puis devient nulle après expiration de celui-ci.

Dans le cas capteur situé dans un lieu public de passage, une fonction de type « exponentielle décroissante » peut être utilisée pour modéliser le caractère éphémère de la présence d'un utilisateur.

L'homme du métier pourra également, à partir d'une fonction approximative, utiliser un mécanisme d'apprentissage pour aboutir à une fonction bien adaptée, pouvant intégrer quelques paramètres relatifs à l'utilisateur.

En particulier, chaque fonction d'obsolescence $O_i$ peut être choisie selon la nature des informations fournies par la source d'état $S_i$ correspondante et/ou selon le mode de fonctionnement de cette source d'état.

A titre d'exemple non limitatif, la fonction d'obsolescence $O_i$ est de la forme suivante : $O_i(V) = p_i \times V$ où $p_i$ désigne le poids actualisé que l'on affecte à la variable V désignant une information d'état brute telle qu'une probabilité de présence unitaire V délivrée par une source d'état $S_i$. $O_i(V)$ désigne donc la probabilité de présence unitaire V pondérée par le poids $p_i$.

Par définition, le poids actualisé $p_i$ est un poids dépendant du temps qui est obtenu par une fonction de pondération temporelle notée $p_i(t)$ où t est une variable désignant le temps. On notera que le poids actualisé $p_i$ est normalisé c'est-à-dire que sa valeur est comprise dans l'intervalle [0, 1]. Par la suite, le poids actualisé $p_i$ sera exprimé en pourcentage (%) variant de 0 à 100%.

A titre d'exemple non limitatif, la fonction de pondération temporelle $p_i(t)$ peut être choisie parmi l'une quelconque des fonctions décrites ci-dessous.

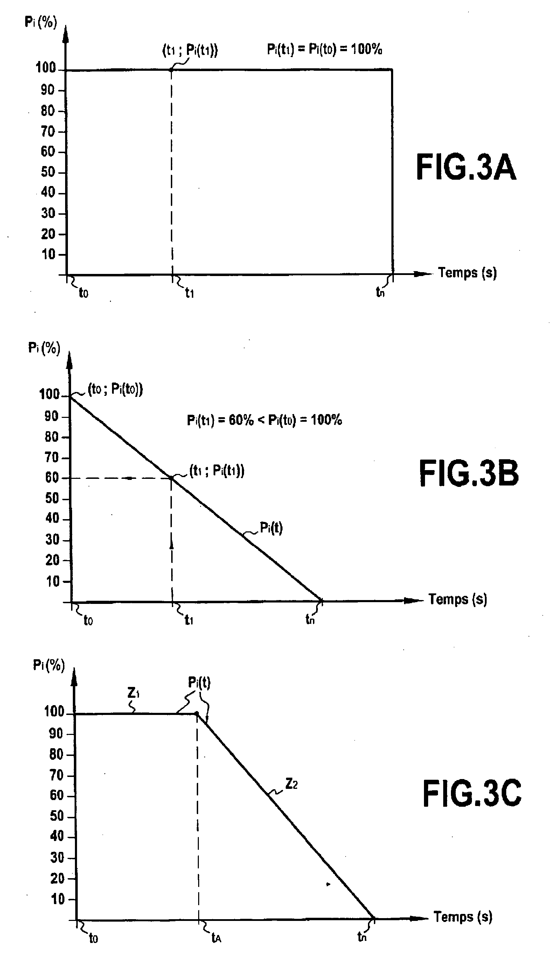

Selon un premier exemple illustré sur la figure 3A, la fonction de pondération $p_i(t)$ est une fonction constante du type $p_i(t) = a$ (où a est une constante réelle comprise entre 0 et 100%). Cette fonction indépendante du temps permet de s'affranchir de tout mécanisme d'obsolescence. Une telle fonction peut par exemple s'appliquer à des informations d'état fournies par un composant réseau chargé de renseigner la présence d'un terminal sur un réseau. Dans ce cas, il s'agit d'informations de présence réseau. De telles informations de présence restent valables au cours du temps, entre deux mises à jour consécutives effectuées par le composant de gestion de présence réseau. Par exemple, les informations de présence d'un terminal mobile sur un réseau cellulaire restent inchangées tant que le composant de gestion de présence réseau n'a pas détecté de changement de l'état de connectivité du terminal sur le réseau. Dans ce cas, le mécanisme d'obsolescence ne s'applique pas étant donné qu'il s'agit d'informations de présence réseau et non pas d'informations de présence de l'utilisateur lui-même.

Selon un deuxième exemple représenté sur la figure 3B, la fonction de pondération $p_i(t)$ est une fonction linéairement décroissante en fonction du temps du type : $p_i(t) = b \times t + c$, où b désigne une constante réelle négative et c désigne une constante réelle strictement positive.

Ce type de fonction permet d'appliquer un amortissement progressif du poids $p_i$ affecté à la variable V en fonction du temps t, l'information pondérée à chaque instant t étant $O_i(V, t) = (b \times t + c) \times V$. Cette fonction s'applique à une source d'état dont les informations de présence fournies à un instant initial perdent de leur pertinence à partir de cet instant initial et linéairement en fonction de leur ancienneté.

La pente de la droite représentative de $p_i(t)$ pourra être également ajustée au cours du temps pour une source d'état donnée, afin de modéliser une vitesse de vieillissement plus ou moins élevée au cours du temps (par exemple, suite à un événement déclenché par l'utilisateur). La pente de la droite représentative de $p_i(t)$ représentée par la constante b pourra être ajustée en fonction de la source d'état considérée, dans le cas où les informations d'état fournies par certaines sources d'état sont amenées à vieillir plus rapidement que d'autres. Ainsi, dans le cas d'un vieillissement rapide, la valeur de la constante *b* sera plus élevée que dans le cas d'un vieillissement plus lent.

Selon un troisième exemple représenté sur la figure 3C, la fonction de pondération $p_i(t)$ est une fonction définie par morceaux comprenant par exemple un plateau (zone constante : $Z_1$) suivi d'un morceau décroissant (zone à décroissance : $Z_2$) s'amorçant à partir d'un temps prédéterminé noté $t_A$. Cette fonction permet de dénoter une information d'état qui cesse brusquement d'être valide passé un certain délai (durée prédéterminée $t_A$-$t_0$). La valeur de $t_A$ pourra être ajustée de manière à s'adapter avantageusement à différentes sources d'état.

Une telle fonction peut être utilisée dans le cas d'une source pour laquelle la durée de présence minimum est connue et/ou prévisible, par exemple, une source permettant de détecter la présence dans un ascenseur, le trajet de l'ascenseur étant considéré à temps minimum constant et l'utilisateur étant contraint à rester à l'intérieur de l'ascenceur pendant le ce temps.

Le choix de la fonction de pondération et par conséquente de la fonction d'obsolescence ne se limite pas aux exemples décrits ci-dessus.

Tout en restant dans le cadre de la présente invention, l'homme du métier pourra donc utiliser toute autre fonction qui permet de modéliser de manière réaliste le vieillissement (ou le caractère obsolescent) des informations d'états fournies par une source d'état donnée.

Comme représenté sur chacune des figures 3A, 3B, 3C, le poids actualisé $p_i$ exprimé en pourcentage (%) est représenté sur l'axe des ordonnées, en fonction du temps t exprimé en secondes (s) et représenté sur l'axe des abscisses.

Dans chacun de ces exemples, un temps initial noté $t_o$ désigne l'instant initial lorsque le poids $p_i$ est maximum (c'est-à-dire $p_i(t_0) = 100$ %), et un temps noté $t_n$ désigne l'instant final lorsque l'information de présence fournie par la source $S_i$ a perdu toute sa pertinence et par conséquent est devenue obsolète (c'est-à-dire $p_i(t_n) = 0$ %). Bien évidemment, la valeur de l'instant final $t_n$ est spécifique à chaque source d'état, étant donné qu'il dépend de la fonction d'obsolescence choisie pour cette source.

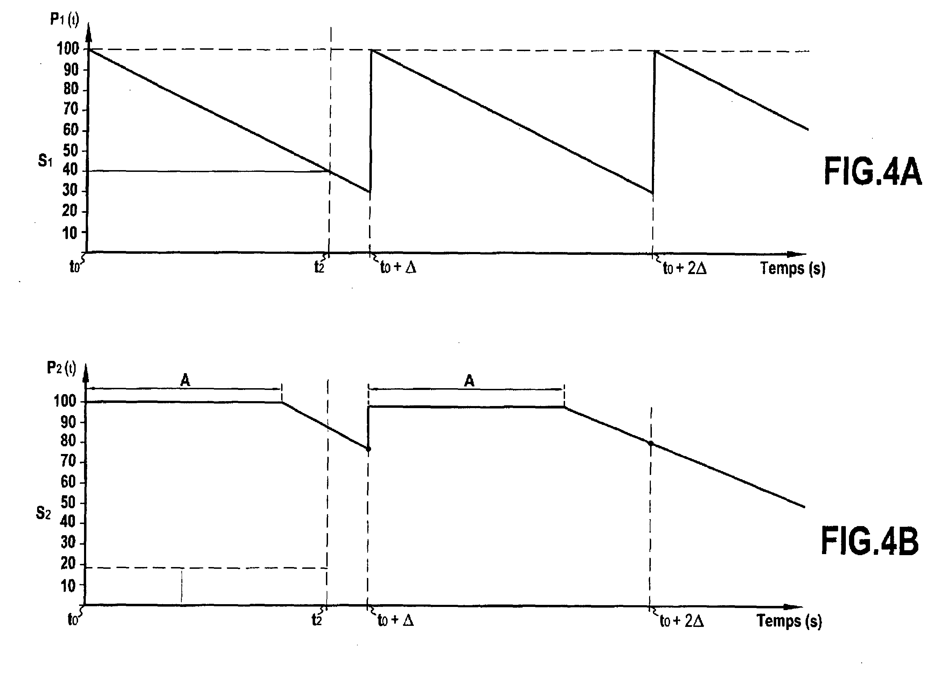

La figure 4 illustre, à titre d'exemple, l'évolution temporelle du poids affecté aux informations d'état de présence unitaire relatives à deux sources d'états différentes notées $S_1$ et $S_2$. Ces informations sont fournies par les sources d'état à intervalles de temps réguliers $\{t_0, t_0+\Delta, t_0+2\Delta,..., t_0+k\Delta\}$, où $\Delta$ représente l'intervalle de temps entre deux opérations de mises à jour successives et k désigne un entier naturel.

Plus précisément, la figure 4A représente l'évolution temporelle du poids $p_1$ relatif aux informations d'état de présence unitaires $V_1$ fournies par une première source d'état $S_1$ associée au terminal T et la figure 4B représente l'évolution temporelle du poids $p_2$ relatif aux informations d'état de présence unitaires $V_2$ fournies par une deuxième source d'état $S_2$ associée au même terminal T.

Dans cet exemple illustratif, on suppose que les informations $V_1$ fournies par la première source $S_1$ perdent de leur pertinence linéairement au cours du temps (conformément à la fonction décrite en référence à la figure 3B), tandis que les informations $V_2$ fournies par la deuxième source $S_2$ sont pondérées selon une fonction par morceaux (conformément à la fonction décrite en référence à la figure 3C).

A l'instant initial $t_0$, les première et deuxième sources $S_1$ et $S_2$ fournissent les informations $V_1$ et $V_2$. A cet instant $t_0$, la pertinence de ces informations est totale, étant donné qu'elles viennent d'être transmises par les sources d'états respectives $S_1$ et $S_2$. Ainsi, les poids affectés à ces informations sont maximum tels que $p_1(t_0) = p_2(t_0) = 100$ %.

A un instant ultérieur $t_2$ ($t_2 > t_0$) tel que représenté sur les figures 4A et 4B, le poids affecté à $V_1$ est de 40% ($p_1(t_2) = 40$%) tandis que le poids affecté à $V_2$ n'est plus que de 20 % ($p_2(t_2) = 20$%), alors qu'à l'instant initial $t_0$, la pertinence de ces deux informations était maximale ($p_1(t_0) = p_2(t_0) = 100$ %) étant donné que ces informations venaient d'être mises à jour par leur source d'état respective.

Conformément à la présente invention, la pondération des informations d'état de présence unitaire rend compte du fait que la pertinence de ces informations évolue au cours du temps.

La prise en compte du vieillissement de ces informations est particulièrement avantageuse dans le cas où l'état de présence de l'utilisateur U doit être déterminé avec une grande fiabilité par exemple à l'instant $t_2$, sans pour autant avoir nécessairement à demander à chaque source d'état de mettre à jour ses informations de présence d'état unitaire à cet instant $t_2$.

En particulier, cette pondération permet d'améliorer la fiabilité des systèmes de gestion de présence qui ne sont pas en mesure d'effectuer des mises à jour fréquentes auprès de chaque source d'état.

En choisissant une fonction d'obsolescence de manière adéquate pour chaque source, le vieillissement de ces informations peut être modélisé en tenant compte des spécificités de chaque source.

Comme illustré sur les figures 4A et 4B, une mise à jour de ces informations à l'instant $t_0+\Delta$ permet de réinitialiser les poids à 100% (soit $p_1(t_0+\Delta) = p_2(t_0+\Delta) = 100\%$) suite à l'obtention des informations de présence fournies par les sources d'état. Après cette mise à jour effectuée à l'instant $t_0+\Delta$, chaque poids $p_1$, $p_2$ évolue (diminue) temporellement sur l'intervalle [$t_0$, $t_0+2\Delta$], selon sa fonction de pondération respective $p_1(t)$, $p_2(t)$ préalablement définie. Cette évolution (décroissance) s'effectue de la même manière que sur l'intervalle de temps précédent [to, $t_0+\Delta$].

Dans cet exemple, on considère que, lors d'une deuxième opération de mise à jour effectuée à l'instant $t_0+2\Delta$, la deuxième source d'état $S_2$ est, pour une raison quelconque, dans l'incapacité de fournir une mise à jour de ses informations $V_2$ respectives. Par conséquent, le poids $p_2$ n'est pas réinitialisé à une valeur de 100 % mais continue de perdre de sa valeur au-delà de $t_0+2\Delta$, en suivant la décroissance linéaire de la fonction $p_2(t)$.

Comme illustré sur les figures 4A et 4B, les informations de présence unitaire fournie par les première et deuxième sources d'état $S_1$, $S_2$, sont pondérées de sorte que :

- suite à la fourniture d'informations de présence unitaires lors d'une opération de mise à jour, le poids qui leur est affecté soit égal à 100 % ;
- entre deux opérations de mise à jour successives, le poids décroit selon la fonction de pondération prédéfinie ;
- en cas de non obtention d'une information d'état de présence unitaire lors d'une opération de mise à jour, le poids associé à cette information d'état continue à décroître au cours du temps.

Par conséquent, la pondération permet d'améliorer la pertinence des informations fournies en modulant dans le temps, le poids affecté à ces informations selon une fonction de pondération prédéfinie et en fonction d'opérations de mise à jour. La pondération est avantageuse notamment dans le cas où au moins une source d'état est incapable de mettre à jour ses informations d'état.

On décrit maintenant un mode de réalisation particulier de la présente invention, dans lequel le procédé de pondération est mis en oeuvre conjointement avec un procédé d'agrégation de données destiné à déterminer l'état de présence d'un utilisateur.

Dans ce cas, le procédé de pondération corrige la pertinence des informations d'état unitaires qui sont utilisées par l'agrégateur 100 pour déterminer la probabilité de présence de l'utilisateur sur chaque terminal. Ainsi, le procédé de pondération permet d'améliorer la fiabilité de l'état de présence déterminé par l'agrégateur 100.

En particulier, la pondération permet d'améliorer la fiabilité avec laquelle la probabilité de présence agrégée P est déterminée par l'agrégateur 100 lors d'une étape d'agrégation, en prenant en compte le vieillissement des informations d'état unitaires $\{V_i\}$ fournies par les différentes sources d'état $\{S_i\}$.

Comme illustré sur la figure 2, l'agrégateur 100 selon l'invention comprend :

- des moyens de collecte 10 pour collecter une pluralité de valeurs de probabilité de présence unitaire $V_1,...,V_n$ fournies respectivement par les sources d'état $S_1,...,S_n$ associées au terminal T, ces informations étant transmises via le réseau 200 (non représenté);
- des moyens de classement 20 pour classer les valeurs de probabilité de présence unitaire $V_1,...,V_n$ par ordre croissant, de manière à former un ensemble ordonné $E = \{V_1,...,V_n\}$ de valeurs de probabilités de présence unitaires, ces valeurs étant destinées à être utilisées pour le calcul de la probabilité d'état de présence agrégée P ;
- des moyens de pondération 35 pour pondérer les valeurs de probabilités de présence unitaire en fonction d'un niveau de pertinence calculé en fonction du temps selon une fonction d'obsolescence $O_i$ déjà décrite, de manière à corriger le poids $p_i$ des probabilités d'état de présence unitaires sur un intervalle de temps déterminé ;
- des moyens de calcul 30 pour calculer la probabilité d'état de présence agrégée P, à partir des valeurs de probabilité de présence unitaire $\{V_1,...,V_n\}$ classées par ordre croissant de l'ensemble ordonné E.

Selon le mode de réalisation illustré sur la figure 2, les moyens de pondération 35 sont inclus/intégrés dans les moyens de calcul 30.

Les moyens de collecte 10, les moyens de classement 20, les moyens de calcul 30, et les moyens de pondération 35 de l'agrégateur 100 sont constitués par des moyens logiciels mis en oeuvre sur un microprocesseur associé à un système de mémoire RAM et/ou ROM.

L'agrégateur 100 selon l'invention maintient un état de présence d'utilisateur pour chaque terminal, avec une probabilité de présence agrégée. Afin de maintenir un état de présence fiable dans le temps, les moyens de collecte 10 de l'agrégateur 100 sont adaptés à interroger en cas de besoin, une source d'état $S_i$, en vue d'obtenir un rafraîchissement de l'état de présence.

Plus spécifiquement, l'agrégateur 100 selon l'invention comprend des moyens pour maintenir à jour une table de présence dans laquelle sont répertoriés tous les terminaux de chaque utilisateur en association avec des informations de présence. Ces moyens de mise à jour sont constitués, par exemple, par des moyens logiciels mis en oeuvre sur un microprocesseur associé à un système de mémoire RAM et/ou ROM.

Pour chaque terminal, la table de présence stocke une probabilité de présence agrégée relative à la présence de l'utilisateur sur ce terminal ainsi qu'une sous-table décrivant toutes les sources d'état associées à ce terminal. Pour chacune de ces sources d'état, au moins les informations suivantes sont conservées dans la sous-table :

- la dernière probabilité d'état de présence unitaire $V_i$ transmise par chaque source $S_i$; et
- la date de la dernière transmission de chaque probabilité d'état de présence unitaire $V_i$. Cette date correspond à l'estampille temporelle Zi mentionnée précédemment.

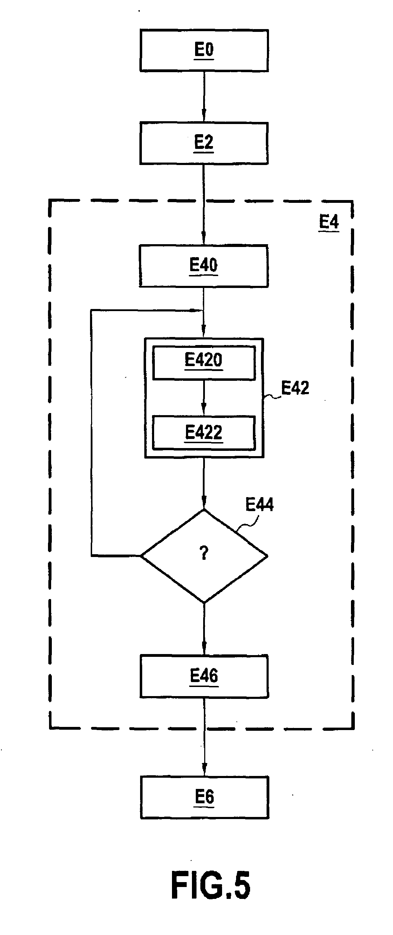

Lors d'une étape initiale de collecte E0 (figure 5), l'agrégateur 100 selon l'invention obtient par les moyens de collecte 10, les valeurs de probabilités d'état de présence unitaires $V_i$ fournies par chaque source d'état $S_i$ associée au terminal T.

Lors d'une étape de classement E2, les moyens de classement 20 de l'agrégateur 100 selon l'invention classent par ordre croissant les valeurs de probabilité de présence unitaire $V_1,...,V_n$ de manière à former un ensemble E = {$V_1,...,V_n$} ordonné qui sera ensuite utilisé pour le calcul de la probabilité d'état de présence agrégée P.

Lors d'une étape de calcul E4, la valeur de probabilité de présence agrégée P est calculée, pour chaque terminal T, en fonction des probabilités de présence unitaires $V_i$ fournies par chaque source d'état $S_i$. Pour cela, les moyens de calcul 30 de l'agrégateur 100 calculent conjointement avec les moyens de pondération 35, la probabilité d'état de présence agrégée P = $M_n$ selon la formule de récurrence suivante :

$$M_i = M_{i-1} + O_i (V_i - M_{i-1}) \qquad\qquad [Eq. 1]$$

avec la condition initiale $M_0 = 0.5$ et pour tout entier naturel i tel que $1 \le i \le n$, où
n est un nombre entier non nul désignant le dernier élément de l'ensemble E tel que $V_n$ = Max ( E ) ;
$V_i$ est une probabilité de présence d'état unitaire fournie par une source d'état désignant la i[ème] valeur prise dans ledit ensemble E ordonné de valeurs triées dans l'ordre croissant ; et
$O_i (V)= p_i(t) \times V$ désigne la fonction d'obsolescence associée à la source ayant fourni la valeur $V_i$.

Pour chaque terminal T, les valeurs de probabilité de présence agrégées par le calcul selon la formule ci-dessus (Eq. 1) permet de préserver la normalisation du résultat de sorte que $0 \le P \le 1$.

On notera que, dans ce mode de réalisation, la pondération et le calcul de la probabilité de présence agrégée sont intriquées comme le montre la formule de récurrence ci-dessus [Eq. 1].

A chaque itération, la quantité ($V_i$ - $M_{i-1}$) est pondérée conformément à l'invention. Pour cela, les moyens de pondération 35 de l'agrégateur 100 affectent le poids $p_i$ à cette quantité ($V_i$ - $M_{i-1}$), en appliquant la fonction d'obsolescence $O_i$ telle que $O_i (V_i - M_{i-1}) = p_i \times (V_i - M_{i-1})$.

Lors d'une sous-étape d'initialisation E40, les moyens de calcul 30 réalisent l'initialisation $M_0 = 0.5$ correspondant à la condition initiale de la formule de récurrence ci-dessus (Eq.1),

Lors d'une sous-étape de calcul E42, les moyens de calcul 30 appliquent la formule de récurrence Eq.1, de manière à calculer $M_1 = M_0 + O_1 (V_1 - M_0)$ lors d'une première itération, à partir de la valeur de $M_0$ initialisée lors de la sous-étape d'initialisation E40 et de la valeur de probabilité de présence unitaire $V_1$ préalablement obtenue lors l'étape de collecte E0.

Pour cela, la quantité ($V_1$ - $M_0$) est pondérée lors d'une étape de pondération E420 conformément à l'invention. Plus précisément, les moyens de pondération 35 de l'agrégateur 100 affectent le poids $p_i$ à cette quantité ($V_1$ - $M_0$), en appliquant la fonction d'obsolescence $O_1$ telle que $O_1 (V_1 - M_0) = p_1 \times (V_1 - M_0)$ lors de l'étape de pondération E420. Lors d'une étape de calcul E422 suivante, les moyens de calcul 30 effectuent le calcul suivant $M_1 = M_0 + O_1 (V_1 - M_0)$. A l'issue de cette étape de calcul, la valeur de $M_1$ ainsi calculée est mémorisée et la première itération est terminée.

S'il reste des éléments à traiter dans l'ensemble ordonné E (étape de test E44 positif), les moyens de calcul 30 appliquent à nouveau la formule de récurrence ci-dessus (Eq.1).

Dans ce cas, $M_2 = M_1 + O_2(V_2 - M_1)$ est calculée lors d'une deuxième itération, à partir de la valeur $M_1$ calculée précédemment lors de la sous-étape de calcul E42 (première itération) et de la valeur de probabilité de présence unitaire $V_2$ obtenue lors de l'étape de collecte E0.

Comme décrit précédemment, les moyens de pondération 35 affectent, lors de l'étape de pondération E420, un poids $p_2$ à la quantité $(V_2 - M_1)$ en lui appliquant la fonction d'obsolescence $O_2$ telle que $O_2(V_2 - M_1) = p_2 \times (V_2 - M_1)$. Lors de l'étape de calcul E422, les moyens de calcul 30 additionnent la valeur $M_1$ à l'information pondérée $p_2 \times (V_2 - M_1)$ de manière à obtenir la valeur de $M_2$.

Les sous-étapes de calcul E42 et de test E44 sont réitérées tant qu'il reste des éléments à traiter dans l'ensemble ordonné E, c'est-à-dire tant que l'indice i reste inférieur au nombre n.

Lorsque i=n, les moyens de calcul 30 effectuent conjointement avec les moyens de pondération 35, le calcul suivant $M_n = M_{n-1} + O_n(V_n - M_{n-1})$ à partir des valeurs $V_n$ et $M_{n-1}$ préalablement obtenues et calculées respectivement comme décrit ci-avant. Pour cela, les moyens de pondération 35 affectent le poids $p_n$ à la quantité $(V_n - M_{n-1})$ lors de l'étape de pondération E420 de sorte que les moyens de calcul 30 ajoute à cette quantité pondérée la valeur $M_{n-1}$ de manière à obtenir $M_n$.

Dès lors que tous les éléments de l'ensemble ordonné E ont été traités par les moyens de calcul 30 (lorsque i>n), la probabilité de présence agrégée P est obtenue égale à $M_n$. Lors d'une sous-étape finale E46, la valeur $M_n$ est stockée ($P = M_n$).

Lors d'une étape d'envoi E6, l'agrégateur 100 envoie de manière connue la probabilité de présence agrégée P ainsi calculée au serveur applicatif 1 via le réseau 200.

On notera que l'étape de calcul E4 est entreprise par les moyens de calcul 30 et de pondération 35, à la suite des étapes de collecte E0 et de classement E2 des valeurs de probabilités unitaires $V_i$ et en réponse à l'un quelconque des événements suivants :

- lors de la réception par les moyens de collecte d'une nouvelle information de présence unitaire $V_i$ en provenance d'une source d'état $S_i$;
- lors de la réception par l'agrégateur 100, d'une requête pour laquelle la probabilité de présence agrégée P est considérée comme insuffisamment précise ou insuffisamment fiable auquel cas, l'étape de calcul E4 est alors exécutée après interrogation de tout ou une partie des sources d'état et obtention d'une mise à jour de la part de ces sources lors de l'étape de collecte E0.

On notera en outre que les valeurs de probabilité unitaires sont classées par ordre croissant lors de l'étape de classement E2 préalablement à l'étape de calcul E4 étant donné que le calcul selon la formule ci-dessus Eq. 1 n'est pas une opération commutative et que par convention on cherche à maximiser la probabilité de présence.

L'opération du calcul n'étant pas commutative, le classement des probabilités de présence unitaires garantit des résultats cohérents, comparables entre eux. Dans cet exemple, on utilise un classement par ordre croissant qui aboutit à des valeurs de probabilité de présence supérieures qu'avec un classement par ordre décroissant.

Conformément à la présente invention, les étapes du procédé décrit ci-avant en référence à la figure 5 sont exécutées par des instructions d'un programme d'ordinateur. Ce programme est ici enregistré dans une mémoire morte 101 (ROM) de l'agrégateur 100 qui constitue un support d'enregistrement 101 du programme d'ordinateur selon la présente invention.

Dans le mode de réalisation décrit ci-dessus, l'étape de pondération est réalisée au niveau de l'agrégateur 100 (par les moyens de pondération 35), conjointement à l'étape de calcul E4 de la probabilité de présence agrégée P, et plus précisément lors de la sous-étape de calcul E42 réalisée par les moyens de calcul 30.

Selon un autre mode de réalisation, l'étape de pondération est réalisée au niveau de chaque source d'état $S_{ji}$ d'un terminal $T_j$ à condition que celle-ci soit en mesure de gérer elle-même la fonction d'obsolescence $O_{ji}$ et en particulier sa maintenance.

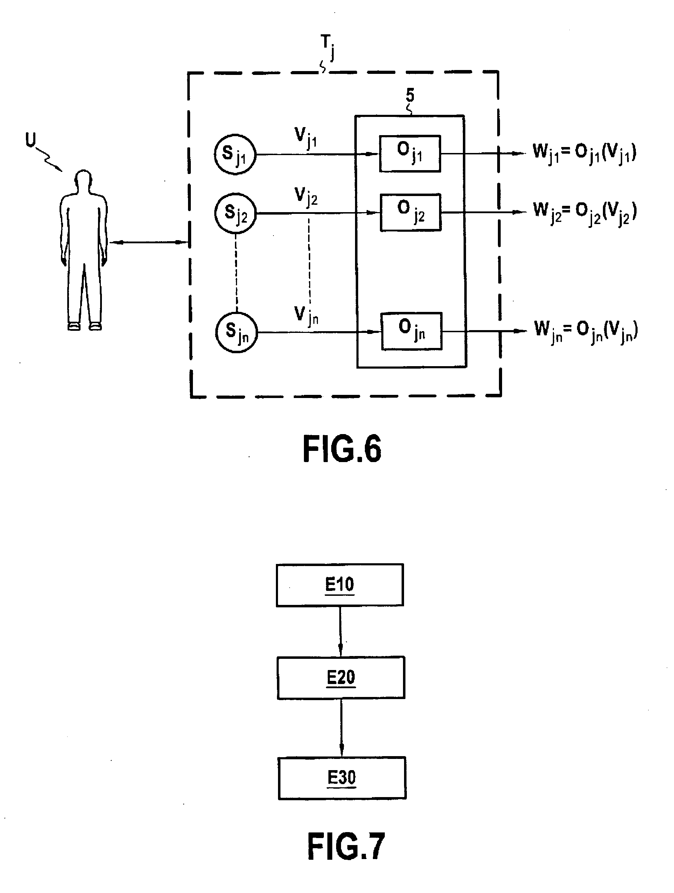

Alternativement, l'opération de pondération est réalisée par un module de pondération 5 mis en oeuvre dans chaque terminal $T_j$ afin de pondérer les informations d'état de présence $V_{ji}$ fournies en sortie de chaque source d'état associée $S_{ji}$ à ce terminal $T_j$ comme illustré sur la figure 6.

Le module de pondération 5 est par exemple constitué par des moyens logiciels et/ou hardware mis en oeuvre par un microprocesseur associé à un système de mémoire RAM et/ou ROM du terminal.

En référence à la figure 7, lors d'une étape de pondération E20, le module de pondération 5 du terminal $T_j$ corrige la valeur des probabilités de présence unitaire $V_{ji}$ obtenues de chaque source d'état $S_{ji}$ lors d'une étape de collecte E10.

Pour cela, le module de pondération 5 applique à la valeur $V_{ji}$ la fonction d'obsolescence $O_{ji}$ associée à la source $S_{ji}$. A l'issue de l'étape de pondération E20, le module de pondération 5 fournit en sortie, pour chaque source d'état $S_{ji}$, une probabilité de présence unitaire corrigée $W_{ij}$ calculée d'après la formule suivante :

$$W_{ji} = O_{ji} (V_{ji}) = p_{ji} \times V_{ji} \qquad\qquad \text{Eq. 2}$$

$p_{ji}$ désignant le poids actualisé qui est affecté à la probabilité de présence unitaire $V_{ji}$ brute fournie par la source d'état $S_{ji}$ ;

$S_{ji}$ désignant la $i^{\text{ème}}$ source associée au $j^{\text{ème}}$ terminal ;

$V_{ji}$ désignant la probabilité de présence unitaire fournie par la source $S_{ji}$ ;

j, i étant des nombres entiers non nuls identifiant respectivement un terminal et une source d'état associée à ce terminal.

Ainsi, en sortie du module de pondération 5, les probabilités de présence pondérées ou corrigées notées $W_{j1}$, $W_{j2}$, ..., $W_{jn}$ sont stockées lors d'une étape E30 avant d'être transmises à une application utilisatrice.

Comme décrit précédemment, le poids actualisé $p_{ji}$ est obtenu par une fonction de pondération $p_{ji}(t)$ qui est choisie en adéquation avec la source d'état $S_{ji}$.

De manière à optimiser le temps d'exécution de l'étape de pondération et dans le cas où le nombre de source $S_{ji}$ associées au terminal $T_j$ est élevé, une parallélisation de l'opération de pondération pourra être mise en oeuvre. Pour cela, une pluralité de sous-modules de pondération 51, 52,...,5n, seront disposés en parallèle à l'intérieur du module de pondération 5, comme illustré sur la figure 6.

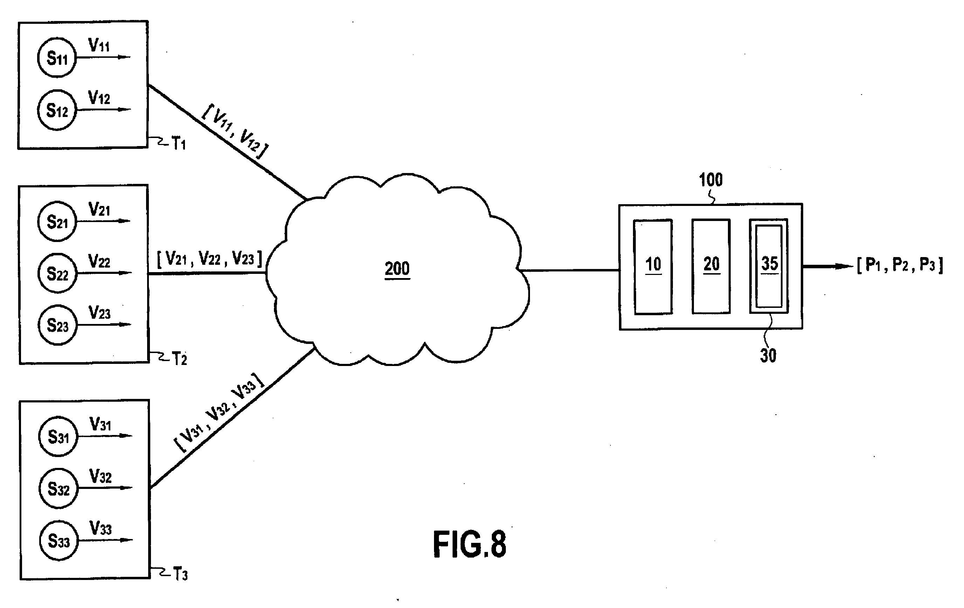

Un exemple détaillé d'application de la présente invention va être maintenant décrit en référence à la figure 8.

Dans cet exemple, on fait ici l'hypothèse que l'utilisateur U dispose de trois terminaux :

- un terminal fixe $T_1$ localisé à son domicile ;
- un terminal portable $T_2$ bi-mode (Cellulaire / WiFi®) qu'il peut conserver sur lui ou poser à proximité ; et
- un ordinateur fixe $T_3$ localisé à son lieu de travail.

A chacun de ces terminaux est associée une pluralité de sources d'état comme décrit ci-dessous.

Le terminal fixe $T_1$ de l'utilisateur U comprend les deux sources d'état suivantes :

- un superviseur $S_{12}$ de la présence réseau ; et
- un détecteur ou scanner RFID $S_{11}$, l'utilisateur disposant d'un tag RFID qu'il conserve sur lui (sous la forme par exemple d'un bracelet ou d'un pendentif).

Le détecteur RFID $S_{11}$ est supposé détecter la présence du tag RFID porté par l'utilisateur U, sans contact, dans un rayon de quelques mètres. Le détecteur RFID $S_{11}$ génère une information d'état de présence périodique indiquant si l'utilisateur U se trouve ou non à l'intérieur de son domaine de portée radio.

Le terminal mobile $T_2$ de l'utilisateur U comprend les trois sources d'état suivantes :

- superviseur de la présence réseau $S_{23}$;
- superviseur de mouvement par centrale inertielle $S_{22}$ ;
- superviseur de Roaming réseau $S_{21}$.

La supervision de la présence réseau est fournie par le réseau d'opérateur. Celle-ci génère une indication d'état de présence dès lors que le terminal mobile $T_2$ s'enregistre auprès du réseau (avec l'identité de l'utilisateur) ou au contraire lorsque le terminal mobile $T_2$ se désenregistre.

Le superviseur de type centrale inertielle $S_{22}$ embarqué dans le terminal mobile $T_2$ génère un événement de mise à jour dès la détection d'un mouvement du terminal mobile $T_2$. La centrale inertielle met en oeuvre un mécanisme d'hystérésis pour limiter la quantité de mises à jour au cours du temps.

Le superviseur de Roaming réseau $S_{21}$ génère un événement de mise à jour dès la détection d'un changement d'état lié à la connectivité du terminal mobile $T_2$. Par exemple, un changement d'état est détecté lorsque le terminal mobile $T_2$ change de cellule dans le réseau cellulaire ou lorsqu'il arrive en portée WiFi® et se connecte à un réseau WiFi®.

L'ordinateur $T_3$ de l'utilisateur U comprend les trois sources d'état suivantes :

- module de déclaration explicite $S_{33}$ de l'état de présence de l'utilisateur;
- superviseur d'activité $S_{32}$ de l'utilisateur par le biais de périphériques de l'ordinateur (clavier, souris) ; et
- superviseur $S_{31}$ associé à une webcam intégrée à l'écran de l'ordinateur, capable de détecter une forme humaine devant l'écran.

Le module de déclaration explicite $S_{33}$ de la présence utilisateur, sur l'ordinateur $T_3$, offre une interface graphique qui permet à l'utilisateur U de préciser son état de présence. Ce module intègre en outre une fonction de requête asynchrone qui interroge périodiquement l'utilisateur pour lui demander de déclarer son état de présent actuel. L'ergonomie de l'interface graphique est réalisée de telle sorte qu'elle permette une mise à jour de l'état de présence la plus simple et la rapide possible et qui soit le moins perturbant possible pour l'utilisateur.

De manière avantageuse, l'utilisateur est interrogé sur son état de présence grâce au processus mis en oeuvre par le module de déclaration explicite, sans que l'utilisateur n'ait à se soucier de maintenir à jour son état de présence au cours du temps.

Le superviseur d'activité $S_{32}$ de l'utilisateur génère périodiquement un état de présence, tant qu'une activité de l'utilisateur est détectée sur l'ordinateur $T_3$. Dès que l'activité s'interrompt, il met à jour avec une probabilité nulle, puis stoppe l'envoi des messages de mise à jour.

Le superviseur $S_{31}$ associé à la webcam génère de même un état de présence périodique tant qu'une forme humaine est reconnue devant l'écran de l'ordinateur $T_3$. De plus, il module la probabilité de présence $V_{31}$ en fonction du résultat fourni par le processus de reconnaissance visuelle (taux de confiance dans la reconnaissance du visage ou de la forme humaine).

On suppose que la fonction d'obsolescence associée à chacune des sources d'état décrite ci-dessus ($S_{11}$, $S_{12}$, $S_{21}$, $S_{22}$, $S_{23}$, $S_{31}$, $S_{32}$, $S_{33}$) est constituée par une fonction linéaire.

Mise en oeuvre conjointe de la pondération avec l'agrégation

On suppose que l'état courant de la table maintenue par l'agrégateur 100 est décrit dans le tableau 1 ci-dessous. La valeur courante des probabilités d'état de présence unitaires $V_{ji}$ fournies par les différentes sources d'état $S_i$ sont comprises entre 0 et 1, et l'ancienneté de cette valeur courante est exprimée en secondes dans la colonne intitulée « Ancienneté ».

**Tableau 1.**

| Terminal / Source d'état | | Valeur courante Brute ($V_{ji}$) | Ancienneté ($Z_{ji}$) (secondes) | Pondération par source ($p_{ji}$) (fonction d'obsolescence linéaire) | Présence agrégée normalisée ($P_j$) |
|---|---|---|---|---|---|
| Terminal fixe ($T_1$) | Superviseur présence réseau ($S_{12}$) | $V_{12} = 1$ | 3600 | $p_{12} = 10\%$ | $P_1 = 0.325$ |
| | Scanner RFID ($S_{11}$) | $V_{11} = 0$ | 55 | $p_{11} = 50\%$ | |
| Terminal mobile ($T_2$) | Superviseur présence réseau ($S_{23}$) | $V_{23} = 1$ | 600 | $p_{23} = 30\%$ | $P_2 = 0.911625$ |
| | Centrale inertielle ($S_{22}$) | $V_{22} = 1$ | 90 | $p_{22} = 75\%$ | |
| | Roaming réseau ($S_{21}$) | $V_{21} = 1$ | 8200 | $p_{21} = 1\%$ | |
| Ordinateur ($T_3$) | Module déclaration explicite ($S_{33}$) | $V_{33} = 1$ | 3600 | $p_{33} = 10\%$ | $P_3 = 0.811$ |
| | Activité clavier/ souris ($S_{32}$) | $V_{32} = 1$ | 210 | $p_{32} = 40\%$ | |
| | Webcam ($S_{31}$) | $V_{31} = 0.75$ | 35 | $p_{31} = 60\%$ | |

On notera que pour chaque terminal $T_1$, $T_2$, $T_3$ dans le tableau 1, les sources d'états $S_{11}$, $S_{12}$ ; $S_{21}$, $S_{22}$, $S_{23}$ ; $S_{31}$, $S_{32}$, $S_{33}$ respectives ont été triées par valeurs de présence croissantes pour chaque terminal $T_1$, $T_2$, $T_3$ correspondant. Les valeurs de probabilité de présence agrégée normalisée $P_1$, $P_2$, $P_3$ pour chaque terminal $T_1$, $T_2$, $T_3$ correspondant sont calculées par les moyens de calcul 30 comme décrit précédemment en utilisant la formule de récurrence suivante :

$$M_{j\,i} = M_{j\,i-1} + O_{j\,i}\,(V_{j\,i} - M_{j\,i-1}) \qquad [Eq.\ 3]$$

On notera que la formule ci-dessus notée Eq.3 correspond à la formule de récurrence précédemment décrite Eq.1 à laquelle un indice j supplémentaire a été ajouté pour désigner les différents terminaux. Dans cet exemple, j est un nombre entier naturel tel que $1 \le j \le 3$. La condition initiale est $M_{j0} = M_0 = 0.5$.

Comme décrit précédemment, à chaque itération, les moyens de pondération 35 de l'agrégateur 100 pondèrent la quantité $(V_{ji} - M_{j\,i-1})$ en lui affectant le poids $p_{ji}$ en appliquant la fonction d'obsolescence $O_{ji}$ de manière à obtenir $O_{ji}$ $(V_{ji} - M_{j\,i-1}) = p_{ji} \times (V_{ji} - M_{j\,i-1})$ qui utilisée par les moyens de calcul 30 pour calculer $M_{j\,i} = M_{j\,i-1} + p_{ji} \times (V_{ji} - M_{j\,i-1})$ lors de la sous-étape de calcul E42 déjà décrite en référence à la figure 5.

Pour l'ordinateur $T_3$, la valeur de la probabilité de présence agrégée est $P_3 = M_{33}$ où $M_{33}$ est obtenu par récurrence, lors de l'étape de calcul E4, comme suit :

Sous-étape d'initialisation E40 : $M_{30} = 0.5$ (condition initiale)
Sous-étape de calcul E42 :

1ère itération : $M_{31} = M_{30} + O_3(V_{31} - M_{30}) = M_{30} + p_{31} \times (V_{31} - M_{30})$

$$M_{31} = 0.5 + 0.60 \times (0.75 - 0.5) = 0.65$$

2ème itération : $M_{32} = M_{31} + p_{32} \times (V_{32} - M_{31})$

$$M_{32} = 0.65 + 0.40 \times (1 - 0.65) = 0.79$$

3ème itération : $M_{33} = M_{32} + p_{33} \times (V_{33} - M_{32})$

$$M_{33} = 0.79 + 0.10 \times (1 - 0.79) = 0.811$$

Mise en oeuvre autonome des fonctions d'obsolescence

Dans ce cas, les fonctions d'obsolescence sont mises en oeuvre de manière autonome sur un dispositif de traitement d'informations d'état de présence relatives à un état de présence d'un utilisateur. Le dispositif de traitement selon l'invention est constitué par un terminal de l'utilisateur comprenant des moyens de pondération déjà décrits.

Par exemple, un tel dispositif de traitement est constitué par un microprocesseur associé à un système de mémoire ROM et/ou RAM connecté au réseau internet au moyen d'une interface réseau. Ce microprocesseur fait tourner une application logicielle qui permet de collecter (moyens de collecte) les informations d'état de présence fournies par les différentes sources d'état associées au terminal. Cette application logicielle comprend des moyens logiciels (moyens de pondération) pour pondérer ces informations d'état de présence en fonction d'un niveau de pertinence calculé en fonction du temps, de manière à corriger le poids des informations d'état de présence sur un intervalle de temps déterminé conformément à la présente invention.

On reprend le scénario décrit ci-dessus, selon lequel l'utilisateur U possède trois terminaux $T_1$, $T_2$, $T_3$. Le tableau 2 ci-dessous présente le résultat de l'étape de pondération des probabilités de présence unitaire brutes $V_{ji}$ obtenues par les différentes sources d'état $S_{ji}$ d'un terminal $T_j$ donné.

La probabilité de présence pondérée $W_{ji} = O_{ji}(V_{ji}) = p_{ji} \times V_{ji}$ peut être vue comme la probabilité que l'utilisateur soit effectivement présent, du point de vue du terminal et de la source d'état considérée $S_{ji}$, compte-tenu du temps passé depuis que la dernière information de présence a été générée et transmise.

**Tableau 2.**

| Terminal / Source d'état | | Valeur courante brute $(V_{ji})$ | Ancienneté (secondes) $(Z_{ji})$ | Pondération $(p_{ji})$ par source (fonction d'obsolescence linéaire) | Probabilité Présence pondérée $(W_{ji} = p_{ji} \times V_{ji})$ |
|---|---|---|---|---|---|
| **Terminal fixe $(T_1)$** | Superviseur présence réseau $(S_{12})$ | $V_{12} = 1$ | 3600 | $p_{12} = 10\%$ | $W_{12} = 0.10$ |
| | Scanner RFID $(S_{11})$ | $V_{11} = 0$ | 55 | $p_{11} = 50\%$ | $W_{11} = 0.00$ |
| **Terminal mobile $(T_2)$** | Superviseur présence réseau $(S_{23})$ | $V_{23} = 1$ | 600 | $p_{23} = 30\%$ | $W_{23} = 0.30$ |
| | Centrale inertielle $(S_{22})$ | $V_{22} = 1$ | 90 | $p_{22} = 75\%$ | $W_{22} = 0.75$ |
| | Roaming réseau $(S_{21})$ | $V_{21} = 1$ | 8200 | $p_{21} = 1\%$ | $W_{21} = 0.01$ |
| **Ordinateur $(T_3)$** | Module déclaration explicite $(S_{33})$ | $V_{33} = 1$ | 3600 | $p_{33} = 10\%$ | $W_{33} = 0.10$ |
| | Activité clavier/ souris $(S_{32})$ | $V_{32} = 1$ | 210 | $p_{32} = 40\%$ | $W_{32} = 0.40$ |
| | Webcam $(S_{31})$ | $V_{31} = 0.75$ | 35 | $p_{31} = 60\%$ | $W_{31} = 0.45$ |

Les poids actualisés $p_{ji}$ sont obtenus d'après une fonction $p_{ji}(t)$ linéaire décroissante en fonction du temps, de sorte qu'à un instant particulier, les poids associés aux informations fournies par les différentes sources sont tels qu'indiqués dans la colonne « Pondération $(p_{ji})$ par source » du tableau 1 ci-dessus.

Un processus extérieur examinant ces diverses valeurs, conclurait que c'est sur le terminal mobile $T_2$ que l'utilisateur U est le plus à même d'être joint. Cependant la valeur la plus haute reste loin du maximum 1, puisqu'elle atteint seulement 0.75.

L'invention va être maintenant décrite dans le cadre d'une application à un service d'appel d'urgence. Dans ce cas, on considère qu'une application utilisatrice s'exécutant sur le serveur applicatif 1 est une application à un service d'appel d'urgence dite « application Appel d'Urgence » ayant besoin de savoir sur quel terminal ou quels terminaux elle peut joindre l'utilisateur, avec une grande fiabilité en cas d'urgence.

Pour simplifier, nous reprenons l'état courant à l'instant $t_1$ de la table de présence décrite précédemment dans le tableau 1. On fait ici l'hypothèse que l'application « Appel d'Urgence » opère depuis le serveur applicatif 1 une requête vers l'agrégateur 100, en demandant la liste complète des terminaux pour lesquels l'utilisateur U a une probabilité de présence supérieure à 95%.

A l'instant $t_1$, les états de présence agrégés pour les trois terminaux $T_1$, $T_2$, $T_3$ sont jugés insuffisamment fiables en raison des temps d'ancienneté relativement élevés (8600, 3600 secondes), indiquant que certaines sources d'état n'ont pas récemment mis à jour leurs informations d'état de présence.

Par conséquent, l'agrégateur 100 lance des interrogations sur les sources qui le permettent, c'est-à-dire :

- le scanner RFID $S_{11}$ sur le terminal fixe $T_1$ ;
- le superviseur $S_{22}$ du terminal mobile $T_2$, à centrale inertielle ;
- l'observateur de roaming réseau, $S_{21}$ du terminal mobile $T_2$;

- le module de déclaration explicite $S_{33}$ sur l'ordinateur $T_3$;
- le superviseur d'activité clavier/souris $S_{32}$ sur l'ordinateur $T_3$;
- le superviseur associé à la webcam $S_{31}$ sur l'ordinateur $T_3$.

Lors de l'étape de collecte E0 décrite précédemment, l'agrégateur 100 obtient par les moyens de collecte 10, en réponse aux interrogations adressées à ces sources d'état $S_{11}$, $S_{22}$, $S_{21}$, $S_{33}$, $S_{32}$, $S_{31}$, de nouvelles probabilités de présence unitaires $V_{11}$, $V_{22}$, $V_{21}$, $V_{33}$, $V_{32}$, $V_{31}$, fournies par les différentes sources d'état respectives.

A l'issue des étapes de classement E2 et de calcul E4 déjà décrites, l'agrégateur 100 met à jour sa table de présence décrivant l'état courant à un instant ultérieur tel que décrit dans le tableau 3 ci-dessous.

Dans le cas où le calcul d'une probabilité de présence agrégée n'est pas requise par l'application « Appel d'Urgence », seule les probabilités de présence unitaire pondérées sont calculées lors de l'étape de pondération selon l'invention conformément au premier mode de réalisation.

**Tableau 3.**

| Terminal / Source d'état | | Valeur courante ($V_{ji}$) | Ancienneté (secondes) ($Z_{ji}$) | Pondération par source ($p_{ji}$) | Présence pondérée ($W_{ji} = p_{ji} V_{ji}$) |
|---|---|---|---|---|---|
| **Terminal fixe (T$_1$)** | Superviseur présence réseau ($S_{12}$) | $V_{12}=1$ | 3600 | $p_{12}=10\%$ | 0.10 |
| | Scanner RFID ($S_{11}$) | $V_{11}=0$ | 0 | $p_{11}=$**100%** | 0 |
| **Terminal mobile (T$_2$)** | Superviseur présence réseau ($S_{23}$) | $V_{23}=1$ | 600 | $p_{23}=30\%$ | 0.30 |
| | Centrale inertielle ($S_{22}$) | $V_{22}=0$ | 0 | $p_{22}=$**100%** | 0 |
| | Roaming réseau ($S_{21}$) | $V_{21}=0$ | 0 | $p_{21}=$**100%** | 0 |
| **Ordinateur (T$_3$)** | Module déclaration explicite ($S_{13}$) | $V_{33}=1$ | 0 | $p_{33}=$**100%** | **1** |
| | Activité clavier/ souris ($S_{12}$) | $V_{32}=1$ | 0 | $p_{32}=$**100%** | 1 |
| | Webcam ($S_{11}$) | $V_{31}=0.75$ | 0 | $p_{31}=$ **100%** | 0.75 |

Suite à l'opération de mise à jour des valeurs courantes $V_{ji}$, les valeurs d'ancienneté associées aux valeurs de probabilité de présence unitaire $V_{ji}$ sont remises à zéro ($Z_{ji} = 0$), ce qui a un fort impact sur les probabilités d'état de présence pondérées $W_{ji}$.

Dans le cas où l'application "Appel d'Urgence" requiert une probabilité de présence agrégée, l'agrégateur 100 calcule conformément à l'invention la présence agrégé $P_1$, $P_2$, $P_3$, pour chaque terminal $T_1$, $T_2$, $T_3$ respectivement. Suite à cette étape de calcul, l'état courant stocké dans la table de présence de l'agrégateur 100 est tel que décrit dans le tableau 4 ci-dessous.

**Tableau 4.**

| Terminal / Source d'état | | Valeur courante ($V_{ji}$) | Ancienneté (secondes) ($Z_{ji}$) | Pondération par source ($p_{ji}$) | Présence agrégée normalisée ($P_j$) |
|---|---|---|---|---|---|
| **Terminal fixe ($T_1$)** | Superviseur présence réseau ($S_{12}$) | $V_{12} = 1$ | 3600 | $p_{12} = 10\%$ | $P_1 = 0.075$ |
| | Scanner RFID ($S_{11}$) | $V_{11} = 0$ | 0 | $p_{11} = 100\%$ | |
| **Terminal mobile ($T_2$)** | Superviseur présence réseau ($S_{23}$) | $V_{23} = 1$ | 600 | $p_{23} = 30\%$ | $P_2 = 0.30$ |
| | Centrale inertielle ($S_{22}$) | $V_{22} = 0$ | 0 | $p_{22} = 100\%$ | |
| | Roaming réseau ($S_{21}$) | $V_{21} = 0$ | 0 | $p_{21} = 100\%$ | |
| **Ordinateur ($T_3$)** | Module déclaration explicite ($S_{13}$) | $V_{33} = 1$ | 0 | $p_{33} = 100\%$ | $P_3 = 1$ |
| | Activité clavier/ souris ($S_{12}$) | $V_{32} = 1$ | 0 | $p_{32} = 100\%$ | |
| | Webcam ($S_{11}$) | $V_{31} = 0.75$ | 0 | $p_{31} = 100\%$ | |

Conformément aux résultats fournis dans le tableau 4, seul l'ordinateur $T_3$ répond au critère de fiabilité (probabilité de présence agrégée $P_3$ supérieure à 95%). L'agrégateur 100 retourne donc cette information à l'application "Appel d'Urgence", qui peut poursuivre son traitement afin d'établir une communication avec l'ordinateur $T_3$ de l'utilisateur U.

L'utilisateur U est vraisemblablement devant l'ordinateur $T_3$ mais auparavant occupé à une tâche ne générant pas d'activité sur les périphériques (visualisation d'un document par exemple). Le module de requête explicite a eu pour effet de déclencher le détecteur d'activité, ce qui est bénéfique au résultat recherché. Son terminal mobile $T_2$ est probablement à portée, puisqu'il l'a déplacé quelques dizaines de secondes auparavant. Cependant lors de l'interrogation, la centrale inertielle a répondu par la négative. De ce fait le terminal mobile $T_2$ ne peut pas être considéré, de façon fiable, et de ce fait, il n'est pas pris en compte dans l'état de présence agrégé.

**Revendications**

1. Procédé de traitement d'informations d'état de présence relatives à un état de présence d'un utilisateur (U) sur un terminal ($T_j$), lesdites informations d'état de présence étant fournies par au moins une source d'état ($S_{j1},..., S_{jn}$) associée audit terminal ($T_j$), ledit procédé comprenant une étape de pondération (E20 ; E420) lors de laquelle lesdites informations sont pondérées en fonction d'un niveau de pertinence calculé en fonction du temps, **caractérisé en ce qu'**une information de présence fournie par une source d'état ($S_1,...,S_n$ ; $S_{11}$, $S_{12}$, $S_{21}$, $S_{22}$, $S_{23}$, $S_{31}$, $S_{32}$, $S_{33}$) est constituée par une probabilité de présence unitaire ($V_1,...,V_n$ ; $V_{11}$, $V_{12}$, $V_{21}$, $V_{22}$, $V_{23}$, $V_{31}$, $V_{32}$, $V_{33}$), ladite probabilité de présence unitaire étant corrigée lors de l'étape de pondération (E420 ; E20), en appliquant une fonction d'obsolescence sur ladite probabilité de présence, de manière à obtenir une probabilité de présence corrigée ($W_{11},...$ , $W_{1n}$), ladite fonction d'obsolescence définissant ledit niveau de pertinence calculé en fonction du temps.

2. Procédé selon la revendication 1, **caractérisé en ce qu'**à chaque source d'état est associé un niveau de pertinence adapté à cette source.

3. Procédé de mise à jour d'un état de présence d'un utilisateur (U) sur au moins un terminal (T ; $T_1$, $T_2$, $T_3$) connecté à un réseau (200) de télécommunications, à partir d'informations d'état de présence fournies par au moins une

source d'état ($S_1,...,S_n$ ; $S_{11}$, $S_{12}$, $S_{21}$, $S_{22}$, $S_{23}$, $S_{31}$, $S_{32}$, $S_{33}$) dudit terminal, ledit procédé étant **caractérisé en ce que** ledit état de présence est déterminé lors d'une étape d'agrégation comprenant :

 • la collecte (E0) d'une pluralité de valeurs de probabilité de présence unitaire ($V_1,...,V_n$ ; $V_{11}$, $V_{12}$, $V_{21}$, $V_{22}$, $V_{23}$, $V_{31}$, $V_{32}$, $V_{33}$) fournies par une pluralité de sources d'état ($S_1,...,S_n$ ; $S_{11}$, $S_{12}$, $S_{21}$, $S_{22}$, $S_{23}$, $S_{31}$, $S_{32}$, $S_{33}$) associées audit terminal ($T$ ; $T_1$, $T_2$, $T_3$);
 • la pondération (E420) desdites valeurs de probabilité de présence unitaire ($V_1,...,V_n$ ; $V_{11}$, $V_{12}$, $V_{21}$, $V_{22}$, $V_{23}$, $V_{31}$, $V_{32}$, $V_{33}$) conformément au procédé de traitement selon la revendication 1 ou 2 ;
 • le calcul (E4) d'une probabilité d'état de présence agrégée ($P$ ; $P_1$, $P_2$, $P_3$), résultant d'une combinaison linéaire desdites valeurs de probabilité de présence unitaire ($V_1,...,V_n$ ; $V_{11}$, $V_{12}$, $V_{21}$, $V_{22}$, $V_{23}$, $V_{31}$, $V_{32}$, $V_{33}$).

4. Procédé de mise à jour selon la revendication 3, **caractérisé en ce que** lors de l'étape d'agrégation, les valeurs de probabilité de présence unitaire ($V_1,...,V_n$) sont classées (E2) par ordre croissant, de manière à former un ensemble ordonné (E) de valeurs, avant d'être utilisées pour le calcul de la probabilité d'état de présence agrégée ($P$ ; $P_1$, $P_2$, $P_3$).

5. Procédé selon la revendication 4, **caractérisée en ce que** ladite probabilité de présence agrégée P associée audit terminal (T) est définie par $P = M_n$ calculée par récurrence selon la formule suivante : $M_i = M_{i-1} + O_i(V_i - M_{i-1})$ avec la condition initiale suivante $M_0 = 0.5$ ; où i est un entier naturel tel que $1 \leq i \leq n$ avec n désignant le dernier élément dudit ensemble ordonné (E) et où $O_i$ désigne la fonction d'obsolescence associée à la source d'état ayant fourni la $i^{ème}$ valeur de probabilité de présence unitaire $V_i$.

6. Dispositif ($T_j$) de traitement d'informations d'état de présence relatives à un état de présence d'un utilisateur sur un terminal, lesdites informations d'état de présence étant fournies par au moins une source d'état associée audit terminal, ledit dispositif comprenant des moyens ($5$ ; $51,...,5n$) pour pondérer lesdites informations d'état de présence en fonction d'un niveau de pertinence calculé en fonction du temps, **caractérisé en ce qu'**une information de présence fournie par une source d'état ($S_1,...,S_n$ ; $S_{11}$, $S_{12}$, $S_{21}$, $S_{22}$, $S_{23}$, $S_{31}$, $S_{32}$, $S_{33}$) est constituée par une probabilité de présence unitaire ($V_1,...,V_n$ ; $V_{11}$, $V_{12}$, $V_{21}$, $V_{22}$, $V_{23}$, $V_{31}$, $V_{32}$, $V_{33}$), ladite probabilité de présence unitaire étant corrigée par les moyens de pondération ($5$ ; $51,...,5n$), en appliquant une fonction d'obsolescence sur ladite probabilité de présence, de manière à obtenir une probabilité de présence corrigée ($W_{11},... ,W_{1n}$), ladite fonction d'obsolescence définissant ledit niveau de pertinence calculé en fonction du temps.

7. Système de mise à jour d'un état de présence d'un utilisateur sur au moins un terminal connecté à un réseau de télécommunication, chaque terminal étant associé à au moins une source d'état destinée à fournir des informations d'état de présence dudit utilisateur, ledit système étant **caractérisé en ce qu'**il comprend un dispositif d'agrégation (100) de données comprenant :

 • des moyens pour collecter (10) une pluralité de valeurs de probabilité de présence unitaire ($V_1,...,V_n$) fournies par une pluralité de sources d'état ($S_1,...,S_n$) associées audit terminal ;
 • des moyens (35) pour pondérer lesdites valeurs de probabilités de présence unitaire en fonction d'un niveau de pertinence calculé en fonction du temps, lesdites valeurs de probabilité de présence unitaire étant corrigées par les moyens de pondération (35), en appliquant une fonction d'obsolescence sur lesdites valeurs de probabilité de présence, ladite fonction d'obsolescence définissant ledit niveau de pertinence calculé en fonction du temps ; et
 • des moyens pour calculer (30) une probabilité d'état de présence agrégée (P), résultant d'une combinaison linéaire desdites valeurs de probabilité de présence unitaire ($V_1,...,V_n$).

8. Système selon la revendication 7, **caractérisé en ce qu'**il comprend des moyens de classement (30) pour classer les valeurs de probabilité de présence unitaire ($V_1,...,V_n$) par ordre croissant de manière à former un ensemble ordonné de valeurs, avant d'être utilisées par lesdits moyens de calcul pour calculer la probabilité d'état de présence agrégée (P).

9. Système selon la revendication 8, **caractérisé en ce que** les moyens de calculs sont adaptés à calculer par récurrence la probabilité de présence agrégée P définie par $P = M_n$ selon la formule suivante : $M_i = M_{i-1} + O_i(V_i - M_{i-1})$ avec la condition initiale suivante $M_0 = 0.5$ ; où i est un entier naturel tel que $1 \leq i \leq n$ avec n désignant le dernier élément dudit ensemble ordonné (E) et où $O_i$ désigne la fonction d'obsolescence associée à la source d'état ayant fourni la $i^{ème}$ valeur $V_i$ de probabilité de présence unitaire.

**10.** Programme d'ordinateur comportant des instructions pour l'exécution des étapes du procédé selon la revendication 1 ou 2 lorsque ledit programme est exécuté par un ordinateur.

**11.** Support d'enregistrement lisible par un ordinateur sur lequel est enregistré un programme d'ordinateur comprenant des instructions pour l'exécution des étapes du procédé selon la revendication 1 ou 2.

**Claims**

**1.** Method for processing presence status information relating to a presence status of a user (U) on a terminal ($T_j$), said presence status information being provided by at least one status source ($S_{j1},..., S_{jn}$) associated with said terminal ($T_j$), said method being **characterized in that** it comprises a weighting step (E20; E420) during which said information is weighted as a function of a relevance level calculated as a function of time, **characterized in that** a presence information cue provided by a status source ($S_1,...,S_n$; $S_{11}$, $S_{12}$, $S_{21}$, $S_{22}$, $S_{23}$, $S_{31}$, $S_{32}$, $S_{33}$) consists of a unitary presence probability ($V_1,...,V_n$; $V_{11}$, $V_{12}$, $V_{21}$, $V_{22}$, $V_{23}$, $V_{31}$, $V_{32}$, $V_{33}$), said unitary presence probability being corrected during the weighting step (E420; E20), by applying an obsolescence function to said presence probability, so as to obtain a corrected presence probability ($W_{11},...,W_{1n}$), said obsolescence function defining said relevance level calculated as a function of time.

**2.** Method according to Claim 1, **characterized in that** with each status source is associated a relevance level adapted to this source.

**3.** Method of updating a presence status of a user (U) on at least one terminal (T; $T_1$, $T_2$, $T_3$) connected to a telecommunications network (200), on the basis of presence status information provided by at least one status source ($S_1,..., S_n$; $S_{11}$, $S_{12}$, $S_{21}$, $S_{22}$, $S_{23}$, $S_{31}$, $S_{32}$, $S_{33}$) of said terminal, said method being **characterized in that** said presence status is determined during an aggregation step comprising:

> • the collecting ($E_0$) of a plurality of values of unitary presence probability ($V_1,...,V_n$; $V_{11}$, $V_{12}$, $V_{21}$, $V_{22}$, $V_{23}$, $V_{31}$, $V_{32}$, $V_{33}$) provided by a plurality of status sources ($S_1,...,S_n$; $S_{11}$, $S_{12}$, $S_{21}$, $S_{22}$, $S_{23}$, $S_{31}$, $S_{32}$, $S_{33}$) associated with said terminal (T; $T_1$, $T_2$, $T_3$);
> • the weighting (E420) of said values of unitary presence probability ($V_1,...,V_n$; $V_{11}$, $V_{12}$, $V_{21}$, $V_{22}$, $V_{23}$, $V_{31}$, $V_{32}$, $V_{33}$) in accordance with the processing method according to Claim 1 or 2;
> • the calculating (E4) of an aggregated presence status probability (P; $P_1$, $P_2$, $P_3$), resulting from a linear combination of said values of unitary presence probability ($V_1,...,V_n$; $V_{11}$, $V_{12}$, $V_{21}$, $V_{22}$, $V_{23}$, $V_{31}$, $V_{32}$, $V_{33}$).

**4.** Updating method according to Claim 3, **characterized in that** during the aggregation step, the values of unitary presence probability ($V_1,...,V_n$) are ranked (E2) in ascending order, so as to form an ordered set (E) of values, before being used for the calculation of the aggregated presence status probability (P; $P_1$, $P_2$, $P_3$).

**5.** Method according to Claim 4, **characterized in that** said aggregated presence probability P associated with said terminal (T) is defined by $P = M_n$ calculated by recurrence according to the following formula: $M_i = M_{i-1} + Oi (Vi - M_{i-1})$ with the following initial condition $M_0 = 0.5$; where i is a natural integer such that $1 \leq i \leq n$ with n denoting the last element of said ordered set (E) and where $O_i$ denotes the obsolescence function associated with the status source having provided the $i^{th}$ value of unitary presence probability $V_i$.

**6.** Device ($T_j$) for processing presence status information relating to a presence status of a user on a terminal, said presence status information being provided by at least one status source associated with said terminal, said device comprising means (5; 51,...,5n) for weighting said presence status information as a function of a relevance level calculated as a function of time, **characterized in that** a presence information cue provided by a status source ($S_1,...,S_n$; $S_{11}$, $S_{12}$, $S_{21}$, $S_{22}$, $S_{23}$, $S_{31}$, $S_{32}$, $S_{33}$) consists of a unitary presence probability ($V_1,...,V_n$; $V_{11}$, $V_{12}$, $V_{21}$, $V_{22}$, $V_{23}$, $V_{31}$, $V_{32}$, $V_{33}$), said unitary presence probability being corrected by the weighting means (5; 51,...,5n), by applying an obsolescence function to said presence probability, so as to obtain a corrected presence probability ($W_{11},..., W_{1n}$), said obsolescence function defining said relevance level calculated as a function of time.

**7.** System for updating a presence status of a user on at least one terminal connected to a telecommunication network, each terminal being associated with at least one status source intended to provide presence status information for said user, said system being **characterized in that** it comprises a data aggregation device (100) comprising:

• means for collecting (10) a plurality of values of unitary presence probability ($V_1,...,V_n$) provided by a plurality of status sources ($S_1,...,S_n$) associated with said terminal;

• means (35) for weighting said values of unitary presence probabilities as a function of a relevance level calculated as a function of time, said values of unitary presence probability being corrected by the weighting means (35), by applying an obsolescence function to said presence probability values, said obsolescence function defining said relevance level calculated as a function of time; and

• means for calculating (30) an aggregated presence status probability (P), resulting from a linear combination of said values of unitary presence probability ($V_1,...,V_n$).

8. System according to Claim 7, **characterized in that** it comprises ranking means (30) for ranking the values of unitary presence probability ($V_1,...,V_n$) in ascending order so as to form an ordered set of values, before being used by said calculation means to calculate the aggregated presence status probability (P).

9. System according to Claim 8, **characterized in that** the calculation means are adapted for calculating by recurrence the aggregated presence probability P defined by $P = M_n$ according to the following formula: $M_i = M_{i-1} + O_i(V_i - M_{i-1})$ with the following initial condition $M_0 = 0.5$; where i is a natural integer such that $1 \leq i \leq n$ with n denoting the last element of said ordered set (E) and where $O_i$ denotes the obsolescence function associated with the status source having provided the $i^{th}$ value $V_i$ of unitary presence probability.

10. Computer program comprising instructions for executing the steps of the method according to Claim 1 or 2 when said program is executed by a computer.

11. Recording medium readable by a computer on which is recorded a computer program comprising instructions for executing the steps of the method according to Claim 1 or 2.

**Patentansprüche**

1. Verfahren zur Verarbeitung von Anwesenheitszustandsinformationen bezüglich eines Anwesenheitszustands eines Benutzers (U) in einem Endgerät ($T_j$), wobei die Anwesenheitszustandsinformationen von mindestens einer dem Endgerät ($T_j$) zugeordneten Zustandsquelle ($S_{j1}, ..., S_{jn}$) geliefert werden, wobei das Verfahren einen Schritt der Gewichtung (E20; E420) enthält, während dem die Informationen in Abhängigkeit von einem in Abhängigkeit von der Zeit berechneten Relevanzgrad gewichtet werden, **dadurch gekennzeichnet, dass** eine von einer Zustandsquelle ($S_1, ..., S_n$; $S_{11}, S_{12}, S_{21}, S_{22}, S_{23}, S_{31}, S_{32}, S_{33}$) gelieferte Anwesenheitsinformation aus einer Einzelanwesenheitswahrscheinlichkeit ($V_1, ..., V_n$; $V_{11}, V_{12}, V_{21}, V_{22}, V_{23}, V_{31}, V_{32}, V_{33}$) besteht, wobei die Einzelanwesenheitswahrscheinlichkeit im Gewichtungsschritt (E420; E20) korrigiert wird, indem eine Obsoleszenzfunktion an die Anwesenheitswahrscheinlichkeit angewendet wird, um eine korrigierte Anwesenheitswahrscheinlichkeit ($W_{11}, ..., W_{1n}$) zu erhalten, wobei die Obsoleszenzfunktion den in Abhängigkeit von der Zeit berechneten Relevanzgrad definiert.

2. Verfahren nach Anspruch 1, **dadurch gekennzeichnet, dass** jeder Zustandsquelle ein an diese Quelle angepasster Relevanzgrad zugeordnet ist.

3. Verfahren zur Aktualisierung eines Anwesenheitszustands eines Benutzers (U) in mindestens einem Endgerät (T; $T_1, T_2, T_3$), das mit einem Telekommunikationsnetz (200) verbunden ist, ausgehend von Anwesenheitszustandsinformationen, die von mindestens einer Zustandsquelle ($S_1, ..., S_n$; $S_{11}, S_{12}, S_{21}, S_{22}, S_{23}, S_{31}, S_{32}, S_{33}$) des Endgeräts geliefert werden, wobei das Verfahren **dadurch gekennzeichnet ist, dass** der Anwesenheitszustand während eines Aggregationsschritts bestimmt wird, der enthält:

• das Sammeln (E0) mehrerer Einzelanwesenheitswahrscheinlichkeitswerte ($V_1, ..., V_n$; $V_{11}, V_{12}, V_{21}, V_{22}, V_{23}, V_{31}, V_{32}, V_{33}$), die von mehreren dem Endgerät (T; $T_1, T_2, T_3$) zugeordneten Zustandsquellen ($S_1, ..., S_n$; $S_{11}, S_{12}, S_{21}, S_{22}, S_{23}, S_{31}, S_{32}, S_{33}$) geliefert werden;

• die Gewichtung (E420) der Einzelanwesenheitswahrscheinlichkeitswerte ($V_1, ..., V_n$; $V_{11}, V_{12}, V_{21}, V_{22}, V_{23}, V_{31}, V_{32}, V_{33}$) gemäß dem Verarbeitungsverfahren nach Anspruch 1 oder 2;

• die Berechnung (E4) einer aggregierten Anwesenheitszustandswahrscheinlichkeit (P; $P_1, P_2, P_3$), die aus einer linearen Kombination der Einzelanwesenheitswahrscheinlichkeitswerte ($V_1, ..., V_n$; $V_{11}, V_{12}, V_{21}, V_{22}, V_{23}, V_{31}, V_{32}, V_{33}$) resultiert.

4. Aktualisierungsverfahren nach Anspruch 3, **dadurch gekennzeichnet, dass** im Aggregationsschritt die Einzelanwesenheitswahrscheinlichkeitswerte ($V_1$, ..., $V_n$) in aufsteigender Reihenfolge eingeordnet werden (E2), um eine geordnete Einheit (E) von Werten zu bilden, ehe sie für die Berechnung der aggregierten Anwesenheitszustandswahrscheinlichkeit (P; $P_1$, $P_2$, $P_3$) verwendet werden.

5. Verfahren nach Anspruch 4, **dadurch gekennzeichnet, dass** die dem Endgerät (T) zugeordnete aggregierte Anwesenheitswahrscheinlichkeit P durch $P = M_n$ definiert wird, berechnet durch Wiederholung gemäß der folgenden Formel: $M_i = M_{i-1} + O_i(V_i - M_{i-1})$ mit der folgenden Anfangsbedingung $M_0 = 0{,}5$; wobei i eine natürliche ganze Zahl ist, derart, dass gilt $1 \leq i \leq n$, wobei n das letzte Element der geordneten Einheit (E) bezeichnet und wobei $O_i$ die Obsoleszenzfunktion bezeichnet, die der Zustandsquelle zugeordnet ist, die den i-ten Einzelanwesenheitswahrscheinlichkeitswert $V_i$ geliefert hat.

6. Vorrichtung ($T_j$) zur Verarbeitung von Anwesenheitszustandsinformationen bezüglich eines Anwesenheitszustands eines Benutzers in einem Endgerät, wobei die Anwesenheitszustandsinformationen von mindestens einer dem Endgerät zugeordneten Zustandsquelle geliefert werden, wobei die Vorrichtung Einrichtungen (5; 51, ..., 5n) enthält, um die Anwesenheitszustandsinformationen in Abhängigkeit von einem in Abhängigkeit von der Zeit berechneten Relevanzgrad zu gewichten, **dadurch gekennzeichnet, dass** eine von einer Zustandsquelle ($S_1$, ..., $S_n$; $S_{11}$, $S_{12}$, $S_{21}$, $S_{22}$, $S_{23}$, $S_{31}$, $S_{32}$, $S_{33}$) gelieferte Anwesenheitsinformation aus einer Einzelanwesenheitswahrscheinlichkeit ($V_1$, ..., $V_n$; $V_{11}$, $V_{12}$, $V_{21}$, $V_{22}$, $V_{23}$, $V_{31}$, $V_{32}$, $V_{33}$) besteht, wobei die Einzelanwesenheitswahrscheinlichkeit von den Gewichtungseinrichtungen (5; 51, ..., 5n) korrigiert wird, indem eine Obsoleszenzfunktion an die Anwesenheitswahrscheinlichkeit angewendet wird, um eine korrigierte Anwesenheitswahrscheinlichkeit ($W_{11}$, ..., $W_{1n}$) zu erhalten, wobei die Obsoleszenzfunktion den in Abhängigkeit von der Zeit berechneten Relevanzgrad definiert.

7. System zur Aktualisierung eines Anwesenheitszustands eines Benutzers in mindestens einem Endgerät, das mit einem Telekommunikationsnetz verbunden ist, wobei jedes Endgerät mindestens einer Zustandsquelle zugeordnet ist, die dazu bestimmt ist, Anwesenheitszustandsinformationen des Benutzers zu liefern, wobei das System **dadurch gekennzeichnet ist, dass** es eine Vorrichtung (100) zur Aggregation von Daten enthält, die enthält:

  • Einrichtungen, um mehrere Einzelanwesenheitswahrscheinlichkeitswerte ($V_1$, ..., $V_n$) zu sammeln (10), die von mehreren dem Endgerät zugeordneten Zustandsquellen ($S_1$, ..., $S_n$) geliefert werden;
  • Einrichtungen (35), um die Einzelanwesenheitswahrscheinlichkeitswerte in Abhängigkeit von einem in Abhängigkeit von der Zeit berechneten Relevanzgrad zu gewichten, wobei die Einzelanwesenheitswahrscheinlichkeitswerte von den Gewichtungseinrichtungen (35) korrigiert werden, indem eine Obsoleszenzfunktion an die Anwesenheitswahrscheinlichkeitswerte angewendet wird, wobei die Obsoleszenzfunktion den in Abhängigkeit von der Zeit berechneten Relevanzgrad definiert; und
  • Einrichtungen (30), um eine aggregierte Anwesenheitszustandswahrscheinlichkeit (P) zu berechnen, die aus einer linearen Kombination der Einzelanwesenheitswahrscheinlichkeitswerte ($V_1$, ..., $V_n$) resultiert.

8. System nach Anspruch 7, **dadurch gekennzeichnet, dass** es Einordnungseinrichtungen (30) enthält, um die Einzelanwesenheitswahrscheinlichkeitswerte ($V_1$, ..., $V_n$) in aufsteigender Reihenfolge einzuordnen, um eine geordnete Einheit von Werten zu bilden, ehe sie von den Recheneinrichtungen verwendet werden, um die aggregierte Anwesenheitswahrscheinlichkeit (P) zu berechnen.

9. System nach Anspruch 8, **dadurch gekennzeichnet, dass** die Recheneinrichtungen geeignet sind, um durch Wiederholung die aggregierte Anwesenheitswahrscheinlichkeit P, die durch $P = M_n$ definiert wird, nach der folgenden Formel zu berechnen: $M_i = M_{i-1} + O_i(V_i - M_{i-1})$, mit der folgenden Anfangsbedingung $M_0 = 0{,}5$; wobei i eine natürliche ganze Zahl ist, derart, dass gilt $1 \leq i \leq n$, wobei n das letzte Element der geordneten Einheit (E) bezeichnet und wobei $O_i$ die Obsoleszenzfunktion bezeichnet, die der Zustandsquelle zugeordnet ist, welche den i-ten Einzelanwesenheitswahrscheinlichkeitswert $V_i$ geliefert hat.

10. Computerprogramm, das Anweisungen für die Ausführung der Schritte des Verfahrens nach Anspruch 1 oder 2 enthält, wenn das Programm von einem Computer ausgeführt wird.

11. Computerlesbarer Aufzeichnungsträger, auf dem ein Computerprogramm aufgezeichnet ist, das Anweisungen für die Ausführung der Schritte des Verfahrens nach Anspruch 1 oder 2 enthält.

FIG.1

FIG.2

$P_i$ (%)

100
90
80
70
60
50
40
30
20
10

$(t_1 ; P_i(t_1))$

$P_i(t_1) = P_i(t_0) = 100\%$

$t_0$    $t_1$    $t_n$    Temps (s)

# FIG.3A

$P_i$ (%)

100
90
80
70
60
50
40
30
20
10

$(t_0 ; P_i(t_0))$

$P_i(t_1) = 60\% < P_i(t_0) = 100\%$

$(t_1 ; P_i(t_1))$

$P_i(t)$

$t_0$    $t_1$    $t_n$    Temps (s)

# FIG.3B

$P_i$ (%)

100
90
80
70
60
50
40
30
20
10

$Z_1$

$P_i(t)$

$Z_2$

$t_0$    $t_A$    $t_n$    Temps (s)

# FIG.3C

FIG.4A

FIG.4B

EP 1 995 932 B1

**FIG.5**

$T_j$

$V_{j1}$    5

$S_{j1}$     $V_{j1}$     $O_{j1}$     $W_{j1} = O_{j1}(V_{j1})$

$S_{j2}$     $V_{j2}$     $O_{j2}$     $W_{j2} = O_{j2}(V_{j2})$

$S_{jn}$     $V_{jn}$     $O_{jn}$     $W_{jn} = O_{jn}(V_{jn})$

U

## FIG.6

E10

E20

E30

## FIG.7

FIG.8

**EP 1 995 932 B1**

**RÉFÉRENCES CITÉES DANS LA DESCRIPTION**

**Documents brevets cités dans la description**

- US 20020143916 A